# FASCICULE DE BREVET EUROPEEN

(11) **EP 0 504 003 B1**
(45) Date de publication et mention de la délivrance du brevet: **21.06.1995**
(21) Numéro de dépôt: 92400548.1
(22) Date de dépôt: 03.03.1992
(51) Int. Cl.: G05G 5/05, G05G 9/02

(54) **Dispositif de rappel en un point central**
Zentralpunktrückstellvorrichtung
Centerpoint return device

(30) Priorité: 15.03.1991 FR 9103200
(43) Date de publication de la demande: 16.09.1992
(73) Titulaire: WABCO WESTINGHOUSE EQUIPEMENTS AUTOMOBILES S.N.C., F-77410 Claye Souilly (FR)
(72) Inventeur: Lievoux, José, F-77165 Le Plessis-l'Evêque (FR); Cabiro, Jean-Luc, F-77100 Meaux (FR)
(74) Mandataire: Hirsch, Marc-Roger

(56) Documents cités:
- FR-A- 1 327 153
- US-A- 4 723 458

## Description

La présente invention s'applique à un dispositif de rappel en un point central ou moyen pour un levier de commande de fonctions susceptible de se déplacer par pivotement autour d'un centre de pivotement selon deux directions sensiblement orthogonales l'une par rapport à l'autre, constitué de deux ressorts à deux bras allongés, sensiblement parallèles entre eux, lesdits ressorts étant disposés croisés à proximité l'un de l'autre, chacun étant orienté selon l'une des directions orthogonales distinctes de déplacement du levier et les deux bras de chaque ressort étant placés de part et d'autre de la tige du levier en position centrale et étant reliés l'un à l'autre à l'une de leurs extrémités par un ressort hélicoïdal de torsion qui tend à refermer les bras l'un vers l'autre sensiblement parallèles entre eux et en appui, à l'autre extrémité, sur une butée sous l'effet de la réaction de torsion du ressort de torsion.

Divers équipements utilisent un levier de commande pivotant selon deux directions orthogonales, mais c'est principalement pour la commande des boîtes de vitesses à trains d'engrenage et du type à commande manuelle que l'on trouve ce type de levier. Dans de tels organes de commande, il existe une position centrale ou de point mort, de part et d'autre de laquelle pivote le levier selon une première direction pour enclencher un rapport de transmission d'une première gamme de rapports, différent selon le sens de pivotement du levier. En faisant pivoter le levier selon une deuxième direction orthogonale à la première, ce levier vient se placer dans une nouvelle plage de pivotement selon la première direction pour enclencher un rapport de transmission d'une deuxième gamme, différent selon le sens de pivotement du levier. Dans ces modes de réalisation, la position de point mort s'applique à plusieurs gammes de deux vitesses en général et s'étend sur une zone angulaire relativement large qui peut atteindre 10° d'angle, car elle est déterminée par une rainure dans laquelle s'engage, avec un jeu important, le levier.

Des commandes de boîtes de vitesses électroniques se sont développées récemment, qui utilisent des capteurs à effet Hall pour déclencher le passage des vitesses à l'aide d'un levier de commande dont le pivotement, selon deux directions orthogonales, s'apparente à celui des anciens leviers de commande manuelle de passage des vitesses. De tels leviers de commande présentent une position centrale disposée comme la position de point mort des leviers de commande des boîtes de vitesses. La position centrale correspond à un capteur (en général un capteur à effet Hall) de marche normale de la boîte de vitesse et cette position centrale doit être positionnée avec une beaucoup plus grande précision. De plus, il n'est pas possible d'assurer le guidage du point central par une rainure car le levier effectue uniquement un déplacement en croix simple.

La présente invention a notamment pour but de proposer un dispositif de rappel en un point central d'un levier de commande, qui permette, d'une part, de guider le déplacement en croix simple du levier sans avoir à utiliser des rainures de guidage et, d'autre part, de positionner avec précision le point central du levier, notamment pour placer l'extrémité du levier en face d'un capteur. Dans le mode de réalisation le plus courant, l'extrémité du levier porte un émetteur de signal, par exemple un aimant, qui doit venir se placer automatiquement, sous l'effet d'une force de rappel puissante, en face d'un capteur à effet Hall avec une bonne précision angulaire, de l'ordre de 2° de part et d'autre du point central idéal.

FR-A-1 327 153 (correspondant au préambule de la revendication 1) décrit un dispositif à ressorts de rappel pour un levier de commande, du genre "manche à balai", vers une position neutre ou centrale à l'aide d'une pluralité de ressorts en épingle, notamment selon une disposition orthogonale de deux ressorts en épingle. Les deux branches de chaque épingle sont maintenues parallèles par une butée cylindrique dont le diamètre est sensiblement égal au diamètre de la section du levier de commande.

Une telle disposition connue s'est révélée inapte à assurer une précision de rappel correspondant aux exigences actuelles concernant la commande électronique des boîtes de vitesse à capteurs à effet Hall. Par ailleurs, selon un autre but de l'invention, le rappel en position centrale doit s'effectuer avec une grande fiabilité, quelle que soit la direction d'actionnement précédente du levier et sans jeu par rapport aux surfaces de rappel et par rapport à un corps de levier, et ceci malgré l'apparition d'usures locales importantes.

A cet effet, le dispositif de rappel selon l'invention est caractérisé en ce que la largeur de la butée est légèrement supérieure au diamètre ou à l'encombrement du levier entre les deux bras sensiblement parallèles entre eux et en ce que, sous l'effet du couple du ressort de torsion, les deux bras présentent une flèche importante apte à rattraper tout le jeu entre les deux bras et le levier de commande, y compris le jeu dû à l'usure. Le ressort hélicoïdal de torsion peut entourer une pièce cylindrique solidaire d'un corps de pivotement du levier et être emprisonné sur la pièce cylindrique par une plaque ou rondelle fixée sur l'extrémité libre de la pièce cylindrique.

Selon un autre mode de réalisation de l'invention, les deux bras d'au moins un ressort sont disposés sensiblement en face l'un de l'autre et chacun des bras d'au moins un ressort présente une partie incurvée en direction de la tige du levier de commande, au niveau de ladite tige placée en position centrale. Les bras allongés présentent de préférence chacun une surface de méplat sur laquelle vient porter la surface extérieure du levier qui peut présenter elle-même une surface de méplat conjuguée en face de chacun des leviers, ces surfaces de méplat pouvant être formées après montage en position des bras et de leur ressort de torsion et, le cas échéant, de la tige du levier. Chaque bras d'au moins un ressort présente de préférence une section circulaire sur laquelle, au moins dans la zone qui est susceptible de venir en contact avec le levier de commande, est ménagée une surface de méplat de contact avec ledit levier. Les deux ressorts de torsion peuvent par ailleurs présenter des raideurs nettement différentes qui provoquent, sur le levier de commande, des forces de rappel différentes selon la direction orthogonale de déplacement du levier.

D'autres buts, avantages et caractéristiques apparaîtront à la lecture de la description de divers modes de réalisation de l'invention, faite à titre non limitatif et en regard du dessin annexé, dans lequel:
- la figure 1 représente la vue en coupe transversale selon le plan I-I de la figure 3, de la partie de dispositif de rappel en un point central d'une tête de commande de boîte de vitesses;
- la figure 2 représente la vue en coupe, selon le plan II-II de la figure 1, de la tête de commande de boîte de vitesses représentée à la figure 1;
- la figure 3 représente la vue en coupe, selon le plan III-III de la figure 1, de la tête de commande de boîte de vitesses représentée à la figure 1;
- la figure 4 représente une vue en coupe, analogue à celle de la figure 1, d'un dispositif de rappel au point central d'une tête de commande de boîte de vitesses dans laquelle le levier de commande est déplacé selon une première direction orthogonale;
- la figure 5 représente la même vue en coupe que la figure 4, dans laquelle le levier de commande est déplacé selon l'autre direction orthogonale;
- la figure 6 représente en coupe transversale, analogue à celle des figures 4 et 5, un autre mode de réalisation du dispositif de rappel en un point central pour un levier de commande de fonctions;
- la figure 7 représente en vue de dessous un autre mode de réalisation du dispositif de rappel au point central pour un levier de commande de boîte de vitesses;
- la figure 8 représente une vue de dessous, analogue à la figure 7, dans laquelle le levier de commande de boîte de vitesses est déplacé selon l'une des directions orthogonales de déplacement.

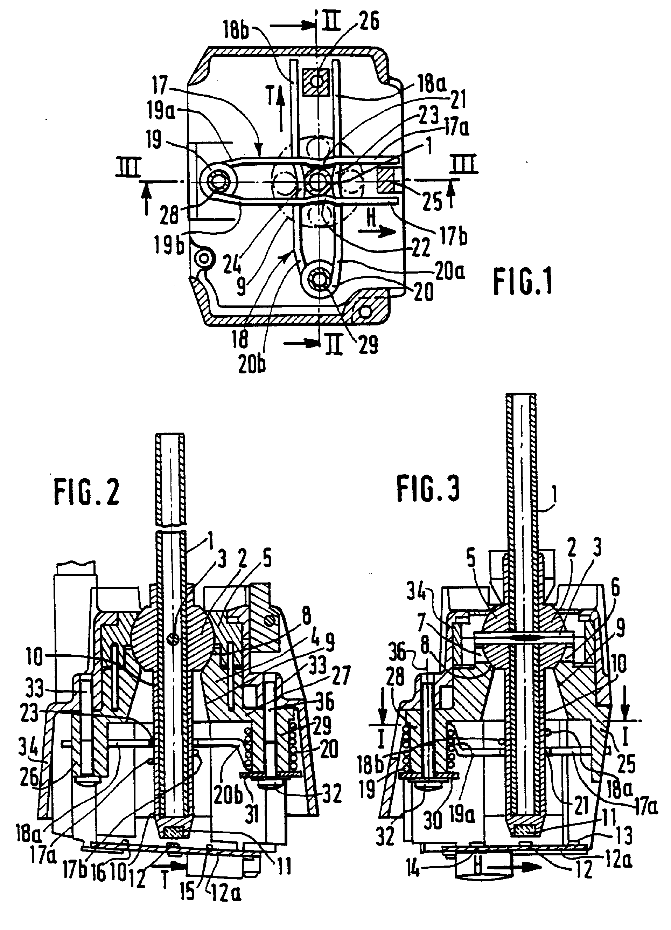

Si l'on se reporte aux figures 2 et 3, on reconnaît un levier 1 de commande d'une boîte de vitesses non représentée. Le levier 1 qui est susceptible de se déplacer selon deux directions orthogonales, est relié à une rotule de forme générale sphérique 2 traversée par un axe transversal 3 autour duquel peut pivoter le levier 1 pour définir une première direction de pivotement indiquée par la flèche T à la figure 2. La rotule 2, qui est par exemple surmoulée sur le levier tubulaire 1, est emprisonnée entre une coquille inférieure 4 à ouverture conique et une coquille supérieure 5 à logement sphérique. La coquille inférieure 4 présente, en-dessous de l'axe 3, des encoches 6 et 7 laissant le passage à l'axe 3 pour permettre au levier 1 de pivoter selon une deuxième direction de pivotement, définie par la flèche H à la figure 3.

La coquille inférieure 4 présente, après son ouverture conique 8 s'évasant vers le haut des figures 2 et 3 et servant à l'appui de la rotule 2, une ouverture 9 s'évasant vers le bas de la figure. L'ouverture 9 présente également une paroi conique dont la surface peut servir de butée à la surface cylindrique extérieure du levier constituée par un prolongement 10 de la rotule 2 formant gaine sur le tube de levier 1. Le contact de butée de la surface extérieure du prolongement tubulaire ou gaine 10 sur la surface conique de l'ouverture 9 peut être linéaire ou sensiblement linéaire du fait que le sommet du cône de l'ouverture 9 n'est pas centré sur le centre de la rotule 2 mais est décalé axialement vers le haut des figures 2 et 3 d'une longueur permettant ce contact linéaire.

A sa partie inférieure selon les figures 2 et 3, le prolongement tubulaire 10, surmoulé sur le tube de levier 1 et maintenu en position par l'axe transversal 3, porte un aimant 11 d'excitation de capteurs à effet Hall 12, 13, 14, 15, 16 de commande de maintien ou de passages des vitesses de la boîte de vitesses non représentée. Les capteurs sont montés sur une plaque de fond 12a du corps de levier. Le capteur central 12 est un capteur de maintien en position des vitesses tandis que les capteurs 13 et 14, selon la première direction orthogonales H, sont des capteurs commandant respectivement la montée et la descente des rapports de transmission. Les capteurs 15 et 16, selon la deuxième direction orthogonale T de déplacement du levier, correspondent respectivement à une position de point mort de la boîte de vitesses et à un régime de marche du moteur selon le mode puissance ou selon le mode économique.

Le dispositif de rappel du levier 1 dans une position centrale vient placer l'aimant 11 exactement en face du capteur à effet Hall 12 commandant le maintien du crabotage des vitesses. Ce dispositif de rappel, représenté en plan à la figure 1, est constitué de deux ressorts 17 et 18 à deux bras, respectivement 17a, 17b et 18a, 18b, disposés sensiblement en face l'un de l'autre. Les bras des ressorts 17 et 18 sont croisés selon les deux directions orthogonales H et T des capteurs 12 à 16, à proximité l'un de l'autre. Comme on le voit sur la figure 1, les deux bras des deux ressorts entourent le levier 1 (en fait sa gaine 10) en le serrant sous l'effet d'un ressort de torsion 19, 20 qui relie entre eux les deux bras des ressorts. Chacun des bras des ressorts comporte, dans le mode de réalisation représenté à la figure 1, une partie 21, 22, 23, 24 incurvée en direction de la tige du levier de commande 1 au niveau de ladite tige placée en position centrale.

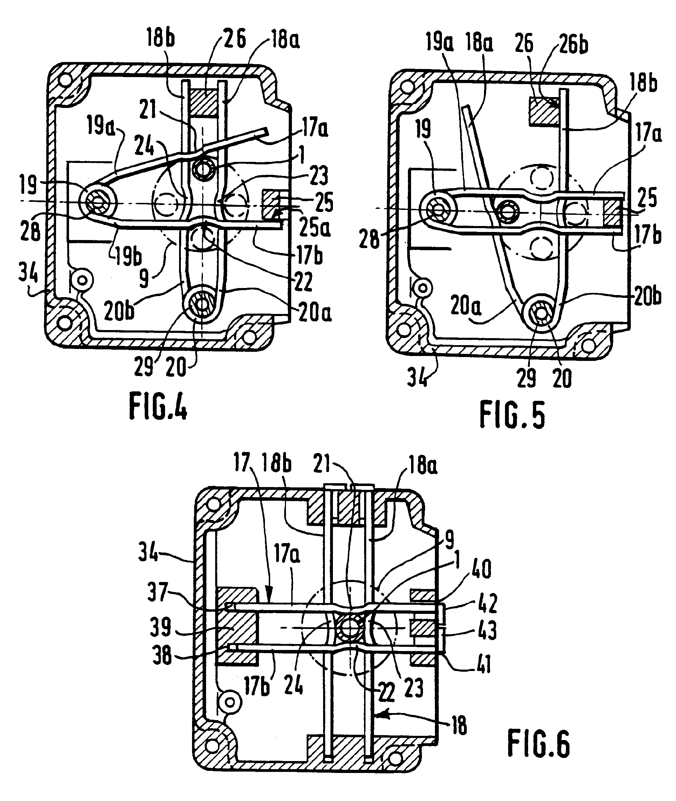

L'effet de la partie incurvée sera expliqué en relation avec les figures 4 et 5.

Des blocs de butée 25 et 26, solidaires d'un corps de pivotement 27 du levier, monobloc avec la coquille inférieure 4, sont disposés entre les bras 17a et 17b et respectivement 18a et 18b. Chacun des ressorts hélicoïdaux de torsion 19 et 20 entoure une pièce cylindrique 28, 29 solidaire du corps de pivotement 27 et est emprisonné sur la surface de cette pièce cylindrique par une plaque ou une rondelle 30, 31 (voir aussi figures 2 et 3) fixée fermement sur l'extrémité plate de la pièce cylindrique par une vis 32 vissée dans un taraudage traversant ménagé axialement dans cette pièce cylindrique et qui reçoit, du côté opposé à la vis 32, une tige 33 de fixation d'un corps extérieur 34 d'assemblage des coquilles inférieure 4 et supérieure 5 sur la rotule 2. Le bloc de butée 26 est également muni d'un taraudage de réception d'une tige 33. Le ressort de torsion 19 ou 20 relie les deux bras des ressorts par une partie de liaison inclinée 19a, 19b, respectivement 20a, 20b les repoussant l'un vers l'autre. Chacun des bras est en appui unilatéral sur l'un des côtés du bloc de butée correspondant.

Si l'on se reporte à la figure 4, la tige 1 du levier de commande est déplacée selon la direction orthogonale T à l'encontre du bras de ressort 17a. On voit que la tige 1 reste en contact avec la partie incurvée 21 du levier 17a et cesse d'être en contact avec la partie incurvée 22 du bras de ressort 17b. Du fait de son déplacement selon la direction orthogonale T, la tige de levier 1 cesse également d'être en contact pressé avec les parties incurvées 23 et 24 du ressort 18 et se déplace pratiquement sans frottement entre les bras 18a et 18b. Le bras de ressort 17b vient en appui sur la face 25a du bloc de butée 25 et la tige 1 supporte alors la totalité de la réaction du ressort de torsion 19 rapportée au bras 17a au niveau de la partie incurvée 21. Lorsqu'on relâche l'effort exercé sur la tige de commande 1, le bras de ressort 17a rappelle la tige 1 dans la position représentée à la figure 1 où toutes les parties incurvées 21 à 24 sont en contact avec la surface extérieure cylindrique de la tige 1, seul un léger jeu subsistant entre les bras des ressorts et les blocs de butée 25 et 26.

On a représenté sur la figure 5 l'effet d'un déplacement du levier 1 selon la direction orthogonale H. Le bras 18a est repoussé tandis que le bras 18b vient en appui sur la face 26b du bloc de butée 26. Les différentes autres positions extrêmes du levier 1 sont représentées en traits mixtes sur les figures 1 et 4, 5 et il est aisé d'imaginer les positions correspondantes des ressorts 17 et 18 à partir de ces figures. On remarque sur les figures 2 et 3 que les axes des deux bras de ressort sont disposés chacun sensiblement dans un même plan moyen perpendiculaire à l'axe longitudinal 35 et respectivement 36 des ressorts hélicoïdaux de torsion 19 et 20 et, de préférence, sensiblement au milieu de la longueur de ce ressort de torsion, de telle façon que les parties de liaison inclinées 19a, 19b et respectivement 20a, 20b soient sensiblement égales. Les ressorts de torsion 19 et 20 peuvent avoir des raideurs différentes, de telle façon que le levier de commande soit soumis à des forces de rappel différentes, selon la direction de déplacement. Une telle disposition permet au conducteur qui utilise le levier de commande de vitesses de repérer, simplement par la résistance opposée à son action, la direction de déplacement du levier de commande au passage des vitesses, ce qui peut être utile dans des situations d'urgence ou de vigilance réduite.

On a représenté sur la figure 6 une solution simplifiée du dispositif de rappel en un point central. Les ressorts 17 et 18 sont constitués de deux barrettes séparées dont les extrémités sont maintenues en position sensiblement encastrée par des organes de retenue. Ces organes de retenue sont constitués, dans le mode de réalisation représenté à la figure 6, à une extrémité, par un trou cylindrique 37, 38 ménagé par exemple dans un bloc 39 du corps de levier et dans lequel s'encastre l'une des extrémités cylindriques de la tige de ressort 17a ou respectivement 17b, après que la tige de ressort ait traversé un trou de plus grand diamètre 40, 41 ménagé dans la paroi du corps de levier. Les trous 40 et 41 autorisent le passage des parties incurvées 21 et 22 et les tiges de ressort 17a et 17b sont ensuite encastrées et bloquées en position à leur autre extrémité dans les trous correspondants 40 ou 41 par des cales ou des vis de blocage 42, 43.

La même disposition s'applique aux tiges de ressort perpendiculaires 18a et 18b. Dans le mode de réalisation de la figure 6, il n'existe pas de ressort de torsion et c'est la flexion des tiges de ressort encastrées ou quasi-encastrées à leurs extrémités qui assure le rappel en position centrale ou moyenne. Le mode de réalisation de la figure 6 s'applique de préférence pour des déplacements de tige 1 de faible amplitude et lorsque la position de rappel au centre ne nécessite qu'une précision limitée. La suppression des parties incurvées 21 à 24 permet d'utiliser des tiges semi-encastrées qui peuvent tourner sans dommage dans leur guidage d'encastrement au cours de l'actionnement du dispositif de rappel.

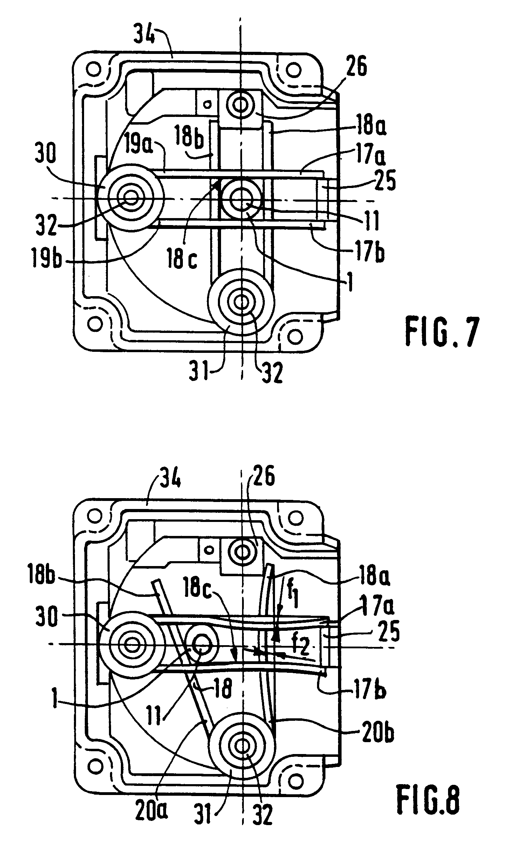

Le mode de réalisation représenté sur les figures 7 et 8 convient pour un guidage de rappel au point central de grande précision, fidèle dans le temps et sans jeu. Les deux bras des deux ressorts sont séparés par une butée d'appui 25 ou 26 (la butée 26 est rapportée par une vis et peut présenter une largeur bien calibrée) de leurs extrémités libres. Chaque butée présente une largeur légèrement supérieure au diamètre ou à l'encombrement du levier 1 entre les deux bras qui présentent au départ du ressort de torsion 19, 20 un écartement supérieur à l'encombrement du levier 1. Afin de supprimer le jeu, les deux bras 17a et 17b ou 18a et 18b présentent, sous l'effet du couple du ressort de torsion 19 ou 20, une flèche importante qui rattrape le jeu entre les deux bras. On a représenté sur la figure 8, la flèche f1 du bras 17a après le déplacement du levier 1 selon la direction orthogonale H, et la flèche plus importante f2 du bras 18a qui supporte la totalité du couple de torsion du ressort de torsion 20 après le déplacement du bras 18b par la tige de commande du levier 1. On voit nettement sur la figure 8 que les bras du ressort 17 se rapprochent l'un de l'autre après le départ de la tige de commande pour supprimer tout jeu avec celle-ci dans toutes les positions de service.

En position de point mort représentée à la figure 7, on voit nettement qu'il ne subsiste plus aucun jeu entre les bras des ressorts et, d'une part, le levier 1, d'autre part, les butées 25 et 26, à la différence de la figure 1 où un jeu subsistait au point mort ou central, entre les bras et les butées 25 et 26.

Dans le mode de réalisation selon les figures 7 et 8, le déplacement selon l'une des directions orthogonales provoque une friction du levier 1 sur les faces intérieures du ressort qui guident le déplacement. Ce frottement qui diminue vers la fin de course d'actionnement du fait que l'on se rapproche soit de l'une des butées 25 ou 26, soit de l'un des ressorts de torsion 19 ou 20, assurant aux bras de ressort un écartement supérieur à l'encombrement du levier 1, reste de toute façon inférieur à l'effort de réaction important provoqué par le ressort de torsion 19 ou 20. Il risquerait néanmoins de provoquer une usure linéaire sur la face intérieure des bras de ressort et sur la surface extérieure du levier 1, du fait du contact quasi-ponctuel entre la paroi cylindrique extérieure du levier 1 et la surface cylindrique du bras de ressort. Afin d'éviter une usure accélérée de la zone de contact entre l'intérieur des bras de ressort et la surface extérieure du levier 1, on peut prévoir sur la face intérieure des bras de ressort, susceptible de venir en contact avec le levier 1, une surface de méplat 18c sur laquelle vient porter la surface cylindrique extérieure du levier 1. Si une telle disposition n'existait pas, il serait nécessaire de prévoir des flèches supplémentaires des bras de ressort sur le levier 1 afin de conserver, après usure de la face intérieure des bras de ressort au contact du levier 1, un serrage suffisant des bras de ressort sur la surface extérieur du levier 1. La surface de méplat 18c peut être formée par montage du ressort de torsion 19 et 20 et de ses bras de ressort sur un bloc de réception où le levier 1 est remplacée par un barreau abrasif actionné alternativement, la surface de méplat est ainsi formée exactement à l'emplacement souhaité.

Lorsque les flèches f1 et f2 sont nettement supérieures à l'usure possible ou admissible pour les bras de ressort et pour le levier 1, quelle que soit l'usure en service, la tige 1 est positionnée sans jeu en position de point mort et, bien sûr, en cours de déplacement vers une position de commande où elle s'appuie fermement sur l'un des bras de ressort tandis que le bras conjugué est en appui sur sa butée 25 ou 26. On doit considérer que les bras de ressort sont réalisés en acier à ressort trempé et sont donc peu sensibles à l'usure tandis que la gaine 10 du levier 1 peut être en matière plastique. Dans un tel cas, c'est la gaine 10 qui s'use rapidement au contact des bras en formant, en face de chaque bras, une surface de méplat (la tige du levier 1 comporte alors quatre surfaces de méplat), l'usure se poursuivant en direction du levier tubulaire 1 en métal dur jusqu'à ce que les bras de ressort viennent porter sur le métal du levier tubulaire 1 en réalisant un contact mixte matière plastique et métal qui peut être très favorable au frottement et à la résistance'à l'usure. Dans tous les cas, le fait de prévoir des flèches f1 et f2 importantes permet de supporter des usures initiales importantes, de contact et d'adaptation, assurant après un faible nombre d'actionnements initiaux ou de "rodage" un fonctionnement doux et progressif du levier de commande, avec un minimum de frictions, surtout en fin de course de déplacement éloigné du point central, tout en garantissant un retour sûr, puissant et précis vers le point central dès la fin de l'action manuelle (relâchement). Le dispositif de rappel selon l'invention réalise ainsi un compromis surprenant entre la fermeté du rappel au point central et son amortissement car, après la période de "rodage" initial, les frictions dues au serrage des bras de ressort augmentent au voisinage du point central et le bras fléchi (bras 18a sur la figure 8) qui reçoit le choc de la tige de levier se comporte comme un ressort à lame "de rebond" prêt à ramener la tige de levier de façon amortie au point central qui se trouve ainsi stabilisé avec un minimum d'hystérésis. Les méplats qui existent en service sur les bras de ressort et, le cas échéant, sur la tige de levier 1, 10 peuvent être amorcés par rodage après montage de ces éléments en position définitive ou bien par rodage devant une portée abrasive conjuguée.

Le dispositif de rappel en un point central d'un levier se déplaçant en croix a été décrit en association à une commande électronique de boîte de vitesses mais il peut être appliqué à d'autres systèmes de commande à levier se déplaçant en croix où les efforts appliqués et les courses de déplacement sont différents de ceux du domaine d'application qui vient d'être décrit.

Bien entendu, la présente invention n'est pas limitée aux modes de réalisation décrits et représentés mais elle est susceptible de nombreuses variantes accessibles à l'homme de l'art pourvu que l'on ne s'écarte pas du cadre de l'invention tel que défini par les revendications suivantes.

## Revendications

1. Dispositif de rappel en un point central ou moyen pour un levier de commande de fonctions (1) susceptible de se déplacer par pivotement autour d'un centre de pivotement selon deux directions sensiblement orthogonales l'une par rapport à l'autre, constitué de deux ressorts (17, 18) à deux bras allongés (17a, 17b; 18a, 18b), sensiblement parallèles entre eux, lesdits ressorts étant disposés croisés à proximité l'un de l'autre, chacun étant orienté selon l'une des directions orthogonales distinctes de déplacement du levier (1) et les deux bras de chaque ressort (17, 18) étant placés de part et d'autre de la tige du levier (1) en position centrale et étant reliés l'un à l'autre à l'une de leurs extrémités par un ressort hélicoïdal de torsion (19, 20) qui tend à refermer les bras l'un vers l'autre sensiblement parallèles entre eux et en appui, à l'autre extrémité, sur une butée (25, 26) sous l'effet de la réaction de torsion du ressort de torsion, caractérisé en ce que la largeur de la butée (25, 26) est légèrement supérieure au diamètre ou à l'encombrement du levier (1) entre les deux bras (17a, 17b; 18a, 18b) sensiblement parallèles entre eux et en ce que, sous l'effet du couple du ressort de torsion (19, 20), les deux bras présentent une flèche importante (f1, f2) apte à rattraper tout le jeu entre les deux bras et le levier de commande (1), y compris le jeu dû à l'usure.

2. Dispositif de rappel selon la revendication 1, caractérisé en ce que les bras allongés (17a, 17b; 18a, 18b) présentent chacun une surface de méplat (18c) sur laquelle vient porter la surface extérieure du levier (1).

3. Dispositif de rappel selon la revendication 1 ou 2, caractérisé en ce que la tige du levier (1) présente en face de chacun des bras allongés (17a, 17b; 18a, 18b) une surface de méplat sur laquelle vient porter la surface extérieure du bras allongé conjugué (17a, 17b; 18a, 18b).

4. Dispositif de rappel selon l'une quelconque des revendications 1 à 3, caractérisé en ce que la ou les surface(s) de méplat (18c) sur les bras (17a, 17b; 18a, 18b) ou respectivement sur la tige du levier (1) est/sont formée(s) après montage en position des bras et de leur ressort de torsion (19, 20) et, le cas échéant, de la tige du levier (1).

5. Dispositif de rappel selon l'une quelconque des revendications 1 à 4, caractérisé en ce que chaque bras (17a, 17b; 18a, 18b) d'au moins un ressort présente une section circulaire sur laquelle, au moins dans la zone qui est susceptible de venir en contact avec le levier de commande (1), est ménagée une surface de méplat (18c) de contact avec ledit levier.

6. Dispositif de rappel selon l'une quelconque des revendications 1 à 5, caractérisé en ce que le ressort hélicoïdal de torsion (18, 19) entoure une pièce cylindrique (28, 29) solidaire d'un corps de pivotement (27) du levier et est emprisonné sur la pièce cylindrique par une plaque ou rondelle (30, 31) fixée sur l'extrémité libre de la pièce cylindrique.

7. Dispositif de rappel selon l'une quelconque des revendications 1 à 6, caractérisé en ce que chacun des bras (17a, 17b; 18a, 18b) d'au moins un ressort présente une partie incurvée (21 à 24) en direction de la tige du levier de commande (1), au niveau de ladite tige placée en position de point central.

8. Dispositif de rappel selon l'une quelconque des revendications 1 à 7, caractérisé en ce que les deux ressorts de torsion (19, 20) présentent des raideurs nettement différentes qui provoquent, sur le levier de commande (1), des forces de rappel différentes selon la direction orthogonale de déplacement du levier.

## Patentansprüche

1. Vorrichtung zum Rückstellen in einen zentralen oder mittleren Punkt für einen Funktionen-Steuerhebel (1), der sich durch Schwenken um ein Schwenkzentrum in zwei zueinander im wesentlichen senkrechten Richtungen verschieben kann, wobei die Vorrichtung aus zwei Federn (17, 18) mit zwei im wesentlichen zueinander parallelen, langgestreckten Armen (17a, 17b; 18a, 18b) gebildet ist, die in gegenseitiger Nähe über Kreuz angeordnet sind, wobei jede von ihnen in einer der verschiedenen, senkrechten Richtungen der Verschiebung des Hebels (1) orientiert sind und die beiden Arme jeder Feder (17, 18) beiderseits des in der Mittelposition befindlichen Stifts des Hebels (1) angeordnet und an einem ihrer Enden durch eine Torsionsschraubenfeder (19, 20) miteinander verbunden sind, die bestrebt ist, unter der Wirkung ihrer Torsionsgegenkraft die Arme bei im wesentlichen paralleler Orientierung einander anzunähern und am anderen Ende an einem Anschlag (25, 26) abzustützen, dadurch gekennzeichnet, daß die Breite des Anschlags (25, 26) etwas größer als der Durchmesser oder der Platzbedarf des Hebels (1) zwischen den beiden zueinander im wesentlichen parallelen Armen (17a, 17b; 18a, 18b) ist und daß unter der Wirkung des Torsionsfederpaars (19, 20) die beiden Arme stark durchgebogen sind (f1, f2), wodurch jegliches Spiel zwischen den beiden Armen und dem Steuerhebel (1) einschließlich dem durch den Verschleiß hervorgerufenen Spiel beseitigt wird.

2. Rückstellvorrichtung nach Anspruch 1, dadurch gekennzeichnet, daß die langgestreckten Arme (17a, 17b; 18a, 18b) jeweils eine Abflachung (18c) aufweisen, auf der sich die äußere Oberfläche des Hebels (1) abstützt.

3. Rückstellvorrichtung nach Anspruch 1 oder 2, dadurch gekennzeichnet, daß der Stift des Hebels (1) gegenüber jedem der langgestreckten Arme (17a, 17b; 18a, 18b) eine abgeflachte Oberfläche aufweist, auf der sich die äußere Oberfläche des zugehörigen langgestreckten Arms (17a, 17b; 18a, 18b) abstützt.

4. Rückstellvorrichtung nach irgendeinem der Ansprüche 1 bis 3, dadurch gekennzeichnet, daß die Oberfläche(n) der Abflachung (18c) an den Armen (17a, 17b; 18a, 18b) oder am Stift des Hebels (1) nach der Positionierung der Arme und ihrer Torsionsfeder (19, 20) und gegebenenfalls des Stifts des Hebels (1) ausgebildet wird (werden).

5. Rückstellvorrichtung nach irgendeinem der Ansprüche 1 bis 4, dadurch gekennzeichnet, daß jeder Arm (17a, 17b; 18a, 18b) wenigstens einer Feder einen kreisförmigen Querschnitt aufweist, in dem wenigstens in der Zone, die mit dem Steuerhebel (1) in Kontakt gelangen kann, eine abgeflachte Oberfläche (18c) für den Kontakt mit dem Hebel ausgebildet ist.

6. Rückstellvorrichtung nach irgendeinem der Ansprüche 1 bis 5, dadurch gekennzeichnet, daß die Torsionsschraubenfeder (18, 19) ein mit einem Schwenkkörper (27) des Hebels verbundenes zylindrisches Teil (28, 29) umgibt und an dem zylindrischen Teil durch eine Platte oder Scheibe (30, 31), die am freien Ende des zylindrischen Teils befestigt ist, gehalten wird.

7. Rückstellvorrichtung nach irgendeinem der Ansprüche 1 bis 6, dadurch gekennzeichnet, daß jeder der Arme (17a, 17b; 18a, 18b) wenigstens einer Feder auf Höhe des an der Position des zentralen Punkts befindlichen Stifts einen in Richtung des Stifts des Steuerhebels (1) gekrümmten Teil (21 bis 24) aufweist.

8. Rückstellvorrichtung nach irgendeinem der Ansprüche 1 bis 7, dadurch gekennzeichnet, daß die beiden Torsionsfedern (19, 20) deutlich verschiedene Steifigkeiten besitzen, die am Steuerhebel (1) in den zueinander senkrechten Verschiebungsrichtungen des Hebels unterschiedliche Rückstellkräfte hervorrufen.

## Claims

1. Automatic return-to-center device for a function control lever (1) designed to move pivotally about a point of pivoting in two substantially mutually orthogonal directions, consisting of two springs (17, 18) with two elongated arms (17a, 17b; 18a, 18b) substantially parallel to each other, said springs being arranged in a crosswise fashion close one to the other, each being oriented in one of the separate orthogonal directions of movement of said lever (1) and the two arms of each spring (17, 18) being located on each side of the shaft of said lever (1) at a central position and being linked to each other at one of their ends by a helical torsional spring (19, 20) which urges the arms to close together substantially parallel to each other, and, at the other end thereof, bearing against a stop member (25, 26) under the effect of the torsional reaction of said torsional spring, characterized in that the width of said stop member (25, 26) is slightly greater than the diameter or the space occupied by said lever (1) between the two arms (17a, 17b; 18a, 18b) substantially parallel to each other, and in that, under the effect of the couple from said torsional spring (19, 20), the two arms exhibit significant deformation through flexure (f1, f2) able to take up all play between the two arms and said control lever (1), including play due to wear.

2. Return-to-center device according to claim 1, characterized in that the elongated arms (17a, 17b; 18a, 18b) each include a flat (18c) against which the outer surface of said lever (1) bears.

3. Return-to-center device according to claim 1 or 2, characterized in that the shaft of said lever (1) exhibits, opposite each one of said elongated arms (17a, 17b; 18a, 18b), a flat against which the outer surface of the matching elongated arm (17a, 17b; 18a, 18b) bears.

4. Return-to-center device according to any one of claims 1 to 3, characterized in that the flat or flats (18c) on the arms (17a, 17b; 18a, 18b) or, respectively, on the shaft of said lever (1), is/are formed after fitting into position of said arms and their torsional spring (19, 20) and, if appropriate, the shaft of said lever (1).

5. Return-to-center device according to any one of claims 1 to 4, characterized in that each arm (17a, 17b; 18a, 18b) of at least one spring has a circular section which, at least in the region adapted to come into contact with said control lever (1), incorporates a flat (18c) for contact with said lever.

6. Return-to-center device according to any one of claims 1 to 5, characterized in that said helical torsional spring (18, 19) surrounds a cylindrical part (28, 29) integral with a pivoting body (27) of said lever, and is trapped on said cylindrical part by a plate or washer (30, 31) fixed on the free end of said cylindrical part.

7. Return-to-center device according to any one of claims 1 to 6, characterized in that each one of the arms (17a, 17b; 18a, 18b) of at least one spring has a portion (21 to 24) that is curved towards the shaft of said control lever (1), at the level of said shaft when it is set to its center point position.

8. Return-to-center device according to any one of claims 1 to 7, characterized in that the two torsional springs (19, 20) have stiffnesses that are distinctly different, leading to differing return-to-center forces on said control lever (1) in accordance with the orthogonal direction of movement of said lever.
